# EUROPÄISCHE PATENTSCHRIFT

(11) **EP 1 123 163 B1**
(45) Veröffentlichungstag und Bekanntmachung des Hinweises auf die Patenterteilung: **23.07.2003**
(21) Anmeldenummer: 99950687.6
(22) Anmeldetag: 09.10.1999
(51) Int. Cl.: B05B 7/32

(54) **VERFAHREN UND VORRICHTUNG ZUM DOSIEREN UND MISCHEN UNTERSCHIEDLICHER KOMPONENTEN**
METHOD AND DEVICE FOR DOSING AND MIXING DIFFERENT COMPONENTS
PROCEDE ET DISPOSITIF PERMETTANT DE DOSER ET DE MELANGER DIVERS CONSTITUANTS

(30) Priorität: 22.10.1998 DE 19848640
(43) Veröffentlichungstag der Anmeldung: 16.08.2001
(73) Patentinhaber: Graco Verfahrenstechnik GmbH, 33647 Bielefeld (DE)
(72) Erfinder: BUCHHOLZ, Norbert, D-33605 Bielefeld (DE)
(74) Vertreter: Patentanwälte Dipl.-Ing. Bodo Thielking Dipl.-Ing. Otto Elbertzhagen
(86) Internationale Anmeldenummer: EP9907586
(87) Internationale Veröffentlichungsnummer: WO00024522

(56) Entgegenhaltungen:
- GB-A- 2 313 562
- US-A- 3 201 048
- US-A- 5 464 283

## Beschreibung

### TECHNISCHES GEBIET

Die Erfindung betrifft ein Verfahren zum Dosieren und Mischen unterschiedlicher Komponenten nach dem Oberbegriff des Patentanspruchs 1 sowie eine Vorrichtung zur Durchführung dieses Verfahrens.

### STAND DER TECHNIK

Bei einem bekannten Verfahren dieser Art (US 5,464,283 A) wird ein Stammlack, der die erste Komponente bildet, mit vorgegebener Menge kontinuierlich gefördert. Die Menge des kontinuierlich fließenden Lackstroms wird überwacht und die erforderliche Menge einer zweiten Komponente, nämlich von Lösungsmitteln, wird gemessen und in einem vorgegebenen Verhältnis in einen Mischer eingesetzt. Die Menge des Lösungsmittels wird über Ventile gesteuert und in einem vorgegebenen Verhältnis zur konstanten Stammlackmenge, die von einem Durchflußmesser gemessen wird. Stammlack und Lösungsmittel werden mit dem vorgegebenen festen Verhältnis gemeinsam in den Mischer eingesetzt.

Für die Funktionsfähigkeit des Verfahrens ist es unerläßlich, daß der Druck des Lösungsmittels stets über dem Druck des Stammlacks liegen muß.

Bei dem bekannten Stand der Technik wird immer ein bestimmtes Differenzdruckverhältnis zwischen Stammlack und Lösungsmittel eingehalten. Die entsprechende Differenzdruckregelung dient vor allen Dingen dazu, den Lösungsmitteldruck in Abhängigkeit von dem Stammlackdruck nachzuführen. Wenn es durch irgendwelche Einflüsse, beispielsweise durch Verunreinigungen, dazu kommt, daß der Lösungsmitteldruck auf den Druck des Stammlacks oder darunter abgesinkt, muß der Austragvorgang beendet werden, weil das gewählte Mischungsverhältnis in einer solchen Betriebssituation nicht mehr eingehalten werden kann.

Dem Stammlack werden nacheinander zwei Komponenten hinzugefügt, nämlich Lösungsmittel und Härter. Nachdem der Stammlack mit Lösungsmittel versetzt ist, bildet er eine neue Ausgangskomponente, die als neue erste Komponente mit vorgegebener Menge in einen zweiten Mischer eingesetzt wird. Auch die Zudosierung von Härter in den zweiten Mischer zu der aus Lösungsmittel und Stammlack bestehenden ersten Komponente kann wiederum nur in der Weise erfolgen, daß die erste Komponente aus dem ersten Mischer mit vorgegebener Menge in den zweiten Mischer eingeführt wird, während die Härtermenge in den zweiten Mischer entsprechend gesteuert bzw. geregelt zugeführt wird. Auch bei diesem zweiten Verfahrensschritt muß immer die erste Komponente konstant gefördert und die zweite Komponente nachgeführt werden. Auch hier gilt wieder, daß der Austragsvorgang beendet werden muß, wenn das gewählte Mischungsverhältnis in bestimmten Betriebssituationen nicht eingehalten werden kann, in denen der Druck des Härters unter den Druck der ersten Komponente absinkt.

Grundsätzlich ist es auch nachteilig, daß die erforderliche Härtermenge stets in Abhängigkeit von der zugehörigen Stammlackmenge dosiert wird. Hierdurch liegt die Stammlackmenge während der überwiegenden Betriebszeit über der durch das Mischungsverhältnis vorgegebenen Härtermenge. Dieser Nachteil ist insbesondere bei kurzen Spritzintervallen störend. Er kann lediglich durch eine Dosierkontrolle mit anschließender Korrektur des Mischungsverhältnisses behoben werden.

### DIE ERFINDUNG

Ausgehend von diesem Stand der Technik liegt der Erfindung die Aufgabe zugrunde, ein Verfahren der als bekannt vorausgesetzten Art so auszubilden, daß es weniger störanfällig und die zu seiner Durchführung erforderliche Vorrichtung funktionsfähig ist, solange die zu dosierenden Komponenten überhaupt förderbar sind, und zwar unabhängig davon, welche Drücke in den Leitungen herrschen, welche Druckunterschiede sich einstellen und welche Viskositäten die zu dosierenden Komponenten haben.

Die Lösung dieser Aufgabe erfolgt mit den Merkmalen des Patentanspruchs 1 bzw. mit einer Vorrichtung nach Patentanspruch 5.

Bei dem erfindungsgemäßen Verfahren können die Mengen beider Komponenten über pneumatisch angesteuerte Ventile geregelt werden. Es ist ausreichend, daß die pneumatisch angesteuerten Ventile lediglich zwei Betriebszustände einnehmen können, nämlich eine Öffnungsstellung und eine Schließstellung. Dabei bleibt jedes der beiden pneumatisch angesteuerten Ventile jeweils so lange geöffnet, bis die dem gewünschten Mischungsverhältnis entsprechende vorgegebene Menge geflossen ist. Es kann so gearbeitet werden, daß das Ventil anschließend noch über eine eingestellte zusätzliche Zeit in Offenstellung bleibt. Dadurch erfolgt eine Abweichung vom vorgegebenen Mischungsverhältnis bei beiden Komponenten bzw. in Richtung sowohl eines Härterüberschusses als auch eines Härterunterschusses. Mit dem Beginn der Dosierung werden die Mengen beider Komponenten aufaddiert und entsprechend dem eingestellten Mischungsverhältnis korrigiert. Die prozentuale Abweichung der Dosiermengen vom Sollwert wird durch die wachsende Gesamtmenge ständig verringert.

Bevorzugte Ausgestaltungen der Erfindung ergeben sich aus den Unteransprüchen.

### KURZBESCHREIBUNG DER ZEICHNUNGSABBILDUNG

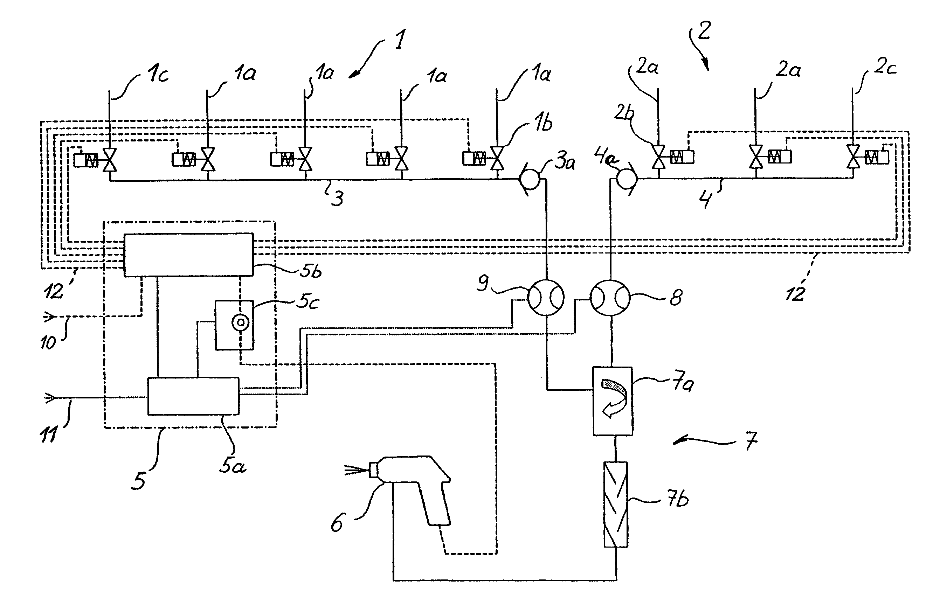

Nachstehend wird eine bevorzugte Ausführungsform der Erfindung anhand der Zeichnung, die eine schematische Darstellung einer Dosier- und Mischvorrichtung für Stammlacke und Härter zeigt, im einzelnen beschrieben.

### BESTER WEG ZUR AUSFÜHRUNG DER ERFINDUNG

Eine Stammlackzuführung 1 weist verschiedene Lackzuleitungen 1a und eine Lösemittelzuleitung 1c auf. Die Lackzuleitungen 1a sind mit nicht dargestellten, unter Vordruck stehenden Vorratsbehältern verbunden. Die Lösemittelzuleitung 1c ist mit einem nicht dargestellten Lösemittelvorratsbehälter verbunden.

Eine Härterzuführung 2 weist zwei Härterzuleitungen 2a und eine Lösemittelzuleitung 2c auf. Diese Leitungen münden sämtlich in eine Zuführung 4. Die beiden Härterzuleitungen 2a sind mit unter Vordruck stehenden, nicht dargestellten Vorratsbehältern für Härter verbunden, die Lösemittelzuleitung 2c mit einem nicht dargestellten Lösemittelvorratsbehälter.

Der Vordruck in der Stammlackzuführung 1 und in der Härterzuführung 2 kann durch nicht dargestellte Förderpumpen erzeugt werden.

Die Zuführungen 3 und 4 münden in eine Mischvorrichtung 7, an die eine Spritzvorrichtung 6 angeschlossen ist. Die Mischvorrichtung 7 besteht aus einem Drallmischer 7a und einem nachgeschalteten Statikmischer 7b.

Die Stammlackzuführung 1 und die Härterzuführung 2 werden von einer Regelvorrichtung 5 angesteuert, die jeweils eine der anzuwählenden Lackzuleitungen 1a und eine der Härterzuleitungen 2a öffnet und schließt. Dazu ist in jeder Lackzuleitung 1a und in der Lösemittelleitung 1c jeweils ein pneumatisch betätigbares Sperrventil 1b vorgesehen.

In den Härterzuleitungen 2a und in der Lösemittelzuleitung 2c sind entsprechende pneumatisch betätigbare Sperrventile 2b vorgesehen.

Die Sperrventile 1b und 2b sind über Druckluftleitungen 12 betätigbar, die mittels nur schematisch angedeuteter Magnetventile 5b mit einer gemeinsamen Versorgungsleitung 10 verbunden sind.

Die Versorgungsleitung 10 liefert auch die Druckluft für die Spritzvorrichtung 6, die im dargestellten Ausführungsbeispiel eine Spritzpistole ist. Die Druckluft für die Spritzvorrichtung 6 wird über eines der mehrfach vorgesehenen und sämtlich mit 5b bezeichneten Magnetventile zugeführt. Die Luftmenge zur Spritzvorrichtung 6 wird über einen Durchflußmesser 5c der insgesamt mit 5 bezeichneten Regelvorrichtung zugeführt. Die Magnetventile 5b werden von einer speicherprogrammierbaren, elektronischen Steuereinheit 5a betätigt, die über ein Kabel 11 mit Strom versorgt wird. Die Umsetzung der elektrischen Signale in eine Druckluftsteuerung ist wegen der Explosionsgefahr bei der Verarbeitung von Lacken besonders sinnvoll.

In der Zuführung 3 sind ein Rückschlagventil 3a und eine Mengenmeßvorrichtung 9 angeordnet. Die Zuführung 4 weist ein Rückschlagventil 4a und eine Mengenmeßvorrichtung 8 auf. Die von den Mengenmeßvorrichtungen 8 und 9 erzeugten Signale werden auf die speicherprogrammierbare Steuereinheit 5a übertragen und dienen entsprechend dem in der Steuereinheit 5a niedergelegten Programm zur Ansteuerung der verschiedenen Magnetventile 5b.

Nach dem Betätigen der Spritzvorrichtung 6, beispielsweise durch Ziehen eines Abzugshebels, wird die angewählte Lackzuleitung 1a durch das zugehörige Sperrventil 1b geöffnet, so daß eine durch die Regelvorrichtung 5 vorgegebene Lackmenge durch die Zuführung 3 strömt. Die pro Zeitintervall geförderte Lackmenge wird durch die Mengenmeßvorrichtung 9 gemessen. Das zur Steuereinheit 5a übertragene Signal der Mengenmeßvorrichtung 9 veranlaßt die Steuerung dazu, das Sperrventil 2b der angewählten Härterleitung 2a zu öffnen, so daß dem in die Mischvorrichtung 7 einströmenden Lack eine dem vorgebenen Verhältnis von Lack zu Härter entsprechende Härtermenge hinzugefügt wird. Sobald durch die Mengenmeßvorrichtung 8 ein Härterüberschuß festgestellt wird, schließt die Regelvorrichtung 5 das Ventil 2b so lange, bis wegen der anschließend ausschließlich zuströmenden Lackmenge wieder Härter benötigt und angefordert wird. Auf diese Weise wird in der Mischvorrichtung das gewünschte Mischungsverhältnis exakt gebildet.

Wenn infolge von Störungen, wie sie sich beispielsweise durch Viskositätsschwankungen, kurzfristige Verschmutzungen oder dergleichen ergeben, das mit dem kontinuierlich zugeführtem Lack zu bildende Mischungsverhältnis trotz eines ständig geöffneten Sperrventils 2b nicht eingehalten werden kann, wird die Lackzufuhr durch das Schließen des vorher geöffneten Ventils 1b so lange unterbrochen, bis eine ausreichende Härtermenge zugeströmt ist. In diesem Fall wird also die Menge des geförderten Lacks der Menge des geförderten Härters nachgeführt. Im Gegensatz zu dem vorher beschriebenen Betriebszustand wird dann also das durch die Mengenmeßvorrichtung 8 ermittelte Signal für die Härtermenge zur Führungsgröße, dem die Lackmenge als Regelgröße folgt. Wegen dieses Funktionsprinzips, das sowohl die Härtermenge als auch die Lackmenge zur Führungsgröße und die jeweils andere Größe zur Regelgröße machen kann, können Druckschwankungen sowohl in der Stammlackzuführung 1 als auch in der Härterzuführung 2 ausgeglichen werden, ebenso wie Viskositäts- und Konsistenzschwankungen beider Medien. Die Anlage bleibt also funktionsfähig, solange noch eine Förderung der Komponenten möglich ist. Auf diese Weise werden kurzfristige Störungen, die bisher häufig ein Abfahren der Anlage erforderlich machten, ohne Unterbrechung des Betriebs überwunden.

## Patentansprüche

1. Verfahren zum Dosieren und Mischen unterschiedlicher Komponenten, insbes. von Stammlack und Härter, und zum Ausbringen über eine Spritzvorrichtung (6), mit unter Vordruck stehender erster Komponente, unter Vordruck stehender zweiter Komponente und unter Vordruck stehendem Lösemittel für die erste Komponente, bei dem durch Ventile zuströmende Komponenten über Mengenmeßvorrichtungen (8; 9) erfaßt, zunächst einer Mischvorrichtung (7) und danach der Spritzvorrichtung (6) zugeführt werden, wobei die eine Komponente mit vorgegebener Menge zugeführt wird und die Menge der anderen Komponente in Abhängigkeit von der Menge der einen Komponente durch die Steuerung der Öffnungszeit eines Sperrventils (1b; 2b) gesteuert zugeführt wird,
**dadurch gekennzeichnet,**
**daß** wahlweise die erste oder die zweite Komponente gesteuert und die jeweils andere mit vorgegebener Menge zugeführt wird.

2. Verfahren nach Anspruch 1,
**dadurch gekennzeichnet,**
**daß** die Menge beider zugeführter Komponenten ständig gemessen, aufaddiert und ständig mit den Vorgaben verglichen wird.

3. Verfahren nach Anspruch 1 oder 2,
**dadurch gekennzeichnet,**
**daß** beide Komponenten mit einer die genaue, der vorgegebenen Menge entsprechenden Dosierungszeit überschreitenden vorgegebenen Nachlaufzeit dosierbar sind.

4. Verfahren nach einem oder mehreren der Ansprüche 1 bis 3,
**dadurch gekennzeichnet,**
**daß** ein Wechsel der Komponenten von Führungsgröße in Regelgröße erfolgt, sobald die Menge der nachgeführten Komponente kontinuierlich zuläuft.

5. Vorrichtung zum Durchführen des Verfahrens nach Anspruch 1 mit mindestens zwei unter Förderdruck stehenden Zuleitungen für zwei Komponenten, zwei Mengenmeßvorrichtungen (8; 9), mit einer Mischvorrichtung (7), in die beide Komponenten eingeleitet werden, und einer Regelvorrichtung (5), die nach einem vorgegebenen Mischungsverhältnis die Mengen einer Komponente über ein Sperrventil (2b) in Abhängigkeit von der gemessenen Menge der anderen Komponente regelt,
**dadurch gekennzeichnet,**
**daß** die Regelvorrichtung (5) zur Regelung auch der Menge der anderen Komponente in Abhängigkeit von der gemessenen Menge der einen Komponente ausgebildet ist und ein weiteres Sperrventil (1b) für die andere Komponente regelt.

6. Vorrichtung nach Anspruch 5,
**dadurch gekennzeichnet,**
**daß** die Zuführung (3; 4) sowohl der ersten Komponente als auch der zweiten Komponente jeweils mit einer Lösemittelzuleitung (1c; 2c) verbunden sind.

7. Vorrichtung nach Anspruch 5 oder 6,
**dadurch gekennzeichnet,**
**daß** die Sperrventile (1b; 2b) druckluftbetätigbar sind.

8. Vorrichtung nach einem oder mehreren der Ansprüche 5 bis 7,
**dadurch gekennzeichnet,**
**daß** die Spritzvorrichtung (6) mit einer Druckluftleitung verbunden ist und die Auslöseeinrichtung zur Einleitung eines vor Beginn des Mischungsaustrags erfolgenden Druckluftaustritts ausgebildet ist.

9. Vorrichtung nach Anspruch 8,
**dadurch gekennzeichnet,**
**daß** in der Druckluftleitung ein Mengenmeßgerät angeordnet ist, dessen Signale einer speicherprogrammierbaren Steuereinheit (5a) der Regelvorrichtung (5) zugeführt werden.

10. Vorrichtung nach einem oder mehreren der Ansprüche 5 bis 9,
**dadurch gekennzeichnet,**
**daß** die Druckluft für die Sperrventile (1b; 2b) durch von der Regelvorrichtung (5) angesteuerte Magnetventile (5b) steuerbar ist.

11. Vorrichtung nach einem oder mehreren der Ansprüche 5 bis 10,
**dadurch gekennzeichnet,**
**daß** in jeder Zuführung (3; 4) zur Mischvorrichtung (7) ein Rückschlagventil (3a; 4a) vorgesehen ist.

12. Vorrichtung nach einem oder mehreren der Ansprüche 5 bis 11,
**dadurch gekennzeichnet,**
**daß** die Mengenmeßvorrichtung (8; 9) ein Durchflußmeßgerät ist.

## Claims

1. Method of dosing and mixing different components, in particular base paint and hardener, and dispensing by means of a spraying device (6), with a first component under pre-pressure, a second component under pre-pressure and solvent for the first component under pre-pressure, wherein components flowing through valves are recorded by means of quantity measuring devices (8; 9), are firstly fed to a mixing device (7) and subsequently to the spraying device (6) wherein one component is fed with the pre-specified quantity and the quantity of the other component is fed in a controlled way depending upon the quantity of the one component through controlling the opening time of a locking valve (1b; 2b),
**characterised in that**
optionally the first or the second component is controlled and the other one is fed with the pre-specified quantity.

2. Method according to claim 1
**characterised in that**
the quantity of the two supplied components is continuously measured, added up and continuously compared with the prescribed indications.

3. Method according to claim 1 or 2
**characterised in that**
the two components can be dosed with a pre-specified time lag exceeding the exact dosing time corresponding to the pre-specified quantity.

4. Method according to one or several of the claims 1 to 3
**characterised in that**
a change of the components from guide value into control value takes place as soon as the quantity of the supplied components runs continuously.

5. Device for carrying out the method according to claim 1 with at least two supply lines under feed pressure for two components, two quantity measuring devices (8; 9), with a mixing device (7), into which the two components are introduced and a regulating device (5) which in accordance with a pre-specified mixing ratio regulates the quantities of a component by means of a locking valve (2b) depending upon the measured quantity of the other component
**characterised in that**
the regulating device (5) is formed for the purpose of regulating also the quantity of the other component depending upon the measured quantity of one component and regulates a further locking valve (1b) for the other component.

6. Device according to claim 5
**characterised in that**
the feeders (3; 4) both of the first component and of the second component are each connected to a solvent supply line (1c; 2c).

7. Device according to claim 5 or 6
**characterised in that**
the locking valves (1b; 2b) can be activated by compressed air.

8. Device according to one or several of the claims 5 to 7
**characterised in that**
the spraying device (6) is connected to a compressed air line and the trigger device is formed for initiating output of compressed air before the beginning of the mix delivery.

9. Device according to claim 8
**characterised in that**
in the compressed air line a quantity measuring device is arranged whose signals are fed to a stored program control unit (5a) of the regulating device (5).

10. Device according to one or several of the claims 5 to 9
**characterised in that**
the compressed air for the locking valves (1b 2b) can be controlled through magnetic valves (5b) controlled by the regulating device (5).

11. Device according to one or several of the claims 5 to 10
**characterised in that**
a non-return valve (3a; 4a) is provided in each feeder (3; 4) to the mixing device (7).

12. Device according to one or several of the claims 5 to 11
**characterised in that**
the quantity measuring device (8; 9) is a flow measuring device.

## Revendications

1. Procédé pour le dosage et le mélange de différents constituants, notamment de laque de base et de durcisseur, et pour l'application, à l'aide d'un dispositif de pulvérisation (6), avec un premier constituant soumis à une pression d'alimentation, un second constituant soumis à une pression d'alimentation et un solvant sous pression d'alimentation pour le premier constituant, procédé dans le cadre duquel des constituants, s'écoulant par des vannes, sont saisis par des dispositifs de mesure de quantité (8; 9), conduits d'abord à un dispositif de mélange (7) et ensuite à un dispositif de pulvérisation (6), l'un des constituant étant amené dans une quantité prédéterminée en dépendance de laquelle la quantité de l'autre constituant est commandée par le temps d'ouverture d'une vanne d'arrêt (b; 2),
**caractérisé en ce que**,
selon le choix, le premier ou le deuxième constituant est commandé et l'autre constituant respectif est amené dans une quantité prédéterminée.

2. Procédé selon la revendication 1,
**caractérisé en ce que**
la quantité des deux constituants amenés est constamment mesurée, additionnée et constamment comparée avec les valeurs de consigne.

3. Procédé selon la revendication 1 ou 2,
**caractérisé en ce que**
les deux constituants peuvent être dosés avec un temps un temps de poursuite prédéterminé qui dépasse le temps de dosage exact, correspondant à la quantité prédéterminée.

4. Procédé selon l'une ou plusieurs des revendications 1 à 3,
**caractérisé en ce que**,
dès que la quantité du constituant asservi est amenée en continu, les constituants passe respectivement de valeur de référence à valeur réglée.

5. Dispositif pour l'exécution du procédé selon la revendication 1, avec, au moins, deux conduites d'amenée sous pression d'alimentation pour deux constituants, deux dispositifs de mesure de quantité (8; 9), avec un dispositif de mélange (7), dans lequel les deux constituants sont chargés, et un dispositif de réglage (5) qui règle, selon un rapport de mélange prédéterminé, les quantités d'un constituant par l'intermédiaire d'une vanne d'arrêt (2b), en dépendance de la quantité mesurée de l'autre constituant,
**caractérisé en ce que**
le dispositif de réglage (5) est conçu pour réguler également la quantité de l'autre constituant en dépendance de la quantité mesurée de l'un des composants et règle une autre vanne d'arrêt (1b) pour l'autre constituant.

6. Dispositif selon la revendication 5,
**caractérisé en ce que**
les installations d'alimentation (3; 4) du premier et du deuxième constituant sont reliées chacune à une conduite d'amenée de solvant (1c 2c).

7. Dispositif selon la revendication 5 ou 6,
**caractérisé en ce que**
les vannes d'arrêt (1b ; 2b) sont actionnables à l'air comprimé.

8. Dispositif selon l'une ou plusieurs des revendications 5 à 7,
**caractérisé en ce que**
le dispositif de pulvérisation (6) est raccordé à une conduite d'air comprimé et que le dispositif de déclenchement est conçu pour amorcer une-sortie d'air comprimé avant l'application du mélange.

9. Dispositif selon la revendication 8,
**caractérisé en ce que**,
dans la conduite d'air comprimé, un appareil de mesure de quantité est disposé, dont les signaux sont conduits à une unité de commande (5a) à programme mémorisé du dispositif de réglage (5).

10. Dispositif selon l'une ou plusieurs des revendications 5 à 9,
**caractérisé en ce que**
l'air comprimé pour les vannes d'arrêt (1b; 2b) peut être commandé par des vannes magnétiques qui sont excitées par le dispositif de réglage.

11. Dispositif selon l'une ou plusieurs de revendications 5 à 10,
**caractérisé en ce que**,
dans chaque installation d'alimentation (3; 4) à destination du dispositif de mélange (7), une soupape de non-retour (3a; 4a) est prévue.

12. Dispositif selon l'une ou plusieurs des revendications 5 à 11,
**caractérisé en ce que**
le dispositif de mesure de quantité (8; 9) est un débimètre.
